# EUROPEAN PATENT APPLICATION

(11) **EP 4 817 912 A1**
(43) Date of publication of application: **07.10.2026**
(21) Application number: 24899906.2
(22) Date of filing: 05.12.2024
(51) Int. Cl.: B60J 1/10, B60J 1/17, B60J 10/76, B60J 10/78, B29C 45/14

(54) **VEHICLE, FLUSH-MOUNTED DOOR CORNER WINDOW ASSEMBLY AND MACHINING METHOD THEREFOR**

(30) Priority: 06.12.2023 CN 202311662258
(71) Applicant: Fuyao Glass Industry Group Co., Ltd., Fuqing, Fujian 350300 (CN)
(72) Inventor: ZENG, Dong, Fuzhou, Fujian 350300 (CN); LI, Haifa, Fuzhou, Fujian 350300 (CN); LIN, Qiming, Fuzhou, Fujian 350300 (CN); CHEN, Hua, Fuzhou, Fujian 350300 (CN); ZHANG, Ke, Fuzhou, Fujian 350300 (CN); WANG, Liqiang, Fuzhou, Fujian 350300 (CN)
(74) Representative: Hoffmann Eitle
(86) International application number: PCT/CN2024/137073
(87) International publication number: WO 2025/119269

(57) **Abstract**

The present application relates to a vehicle, a flush quarter window assembly and a machining method therefor. The flush quarter window assembly comprises quarter window glass (10), an edge trim (20) and a guide rail (30). The guide rail (30) is arranged opposite to and spaced apart from the inner surface of the quarter window glass (10), and a first material injection port (301) is provided in the guide rail (30). The edge trim (20) comprises a main section (21) integrally injection-molded on a spacing region (40) between the inner surface of the quarter window glass (10) and the guide rail (30), and two transverse sections (22) that are integrally injection-molded on the quarter window glass (10) and respectively connected to the opposite two ends of the main section (21). The main section (21) is provided with a first gate corresponding to the first material injection port (301) in position, and second gates are respectively provided in the two transverse sections (22).

## Description

### CROSS-REFERENCE TO RELATED APPLICATIONS

This application claims priority of Chinese Patent Application No. 2023116622583, filed on December 6, 2023, entitled "VEHICLE, FLUSH-MOUNTED DOOR CORNER WINDOW ASSEMBLY AND MACHINING METHOD THEREFOR", the entire content of which is incorporated herein by reference in its entirety.

### TECHNICAL FIELD

The present application relates to the field of glass encapsulation technology, and in particular to a vehicle, a flush quarter window assembly and a processing method therefor.

### BACKGROUND

With the development of glass encapsulation technology, in the related art, a quarter window glass and a lifting glass are usually coplanar, that is, an outer surface of the quarter window glass and an outer surface of the lifting glass are on the same plane. The lifting glass is slidably provided in a sliding groove of a guide rail, which is integrally injection molded with the quarter window glass through an encapsulation. The encapsulation is wrapped around an edge of the quarter window glass, or connected between the guide rail and the quarter window glass. When the encapsulation is wrapped around the edge of the quarter window glass, the encapsulation protrudes from the outer surface of the quarter window glass and is not coplanar with the outer surface of the quarter window glass. Therefore, this structure in the manner has been gradually phased out. When the encapsulation is integrally injection molded and connected between the guide rail and the quarter window glass, the encapsulation can be placed on an inner surface of the quarter window glass, so that the outer surface of the quarter window glass and the outer surface of the lifting glass are coplanar.

However, after the encapsulation is integrally injection molded and connected between the guide rail and the quarter window glass, two opposite surfaces of the encapsulation are connected and fixed to the quarter window glass and the guide rail, respectively. The obtained flush quarter window assembly has poor stability, and is prone to loosening or even detachment after a period of use or under external force.

### SUMMARY

According to various embodiments of the present application, the present application provides a vehicle, a flush quarter window assembly, and a method for processing the same.

A flush quarter window assembly includes:
a quarter window glass;
a guide rail being opposite to and spaced apart from an inner surface of the quarter window glass, the guide rail being provided with a first injection port; and
an encapsulation including a main section integrally injection molded in a spacing area between the inner surface of the quarter window glass and the guide rail, and two transverse sections integrally injection molded on the quarter window glass and respectively connected to opposite ends of the main section; the main section being provided with a first gate corresponding to the position of the first injection port, and each of the two transverse sections being provided with a second gate.

In one embodiment, the first injection port is provided at a middle portion of the main section along a length direction thereof.

In one embodiment, the guide rail includes a first rail plate interconnected with the main section, the first injection port is formed on the first rail plate, the main section is provided with a filling portion filled in the first injection port, and the first gate is formed on a surface of the filling portion; the surface of the filling portion is coplanar with a side surface of the first rail plate away from the main section, or a distance between the surface of the filling portion and the quarter window glass is less than a distance between the side surface of the first rail plate away from the main section and the quarter window glass.

In one embodiment, when the distance between the surface of the filling portion and the quarter window glass is less than the distance between the side surface of the first rail plate away from the encapsulation and the quarter window glass, a height difference S between the surface of the filling portion and the side surface of the first rail plate away from the encapsulation ranges from 1mm to10mm.

In one embodiment, the guide rail is provided with at least one abutting portion tightly abutting against the inner surface of the quarter window glass.

In one embodiment, the abutting portion is provided as a convex point, a tab, a bulge, or a convex column; and/or, a plurality of abutting portions are provided and spaced apart on the guide rail.

In one embodiment, one side of the guide rail along a length direction thereof is provided with a first wall surface, one side of the main section along a length direction thereof is provided with a first side surface, and the first wall surface is coplanar with the first side surface; and/or, another side of the guide rail along a length direction thereof is provided with a second wall surface, another side of the main section along a length direction thereof is provided with a second side surface, and the second wall surface is coplanar with the second side surface.

In one embodiment, the guide rail is provided with a sliding groove, an inner wall of the sliding groove is provided with a limiting portion, a sealing strip is further provided in the sliding groove, and the sealing strip is provided with an anti-detachment portion in limiting fit with the limiting portion.

In one embodiment, a side surface of the guide rail facing the quarter window glass is provided with a reinforcing portion corresponding to the limiting portion.

In one embodiment, an area between the limiting portion and a bottom wall of the sliding groove corresponds to a position of the reinforcing portion.

In one embodiment, the flush quarter window assembly further includes a lifting glass and a moving bracket connected to the lifting glass, the guide rail is provided with a sliding groove, a sealing strip is provided in the sliding groove, and the moving bracket is slidably provided in the sealing strip.

In one embodiment, an outer surface of the lifting glass is coplanar with an outer surface of the quarter window glass.

A processing method for the flush quarter window assembly, which includes the following steps:
providing a molding die, placing the quarter window glass and the guide rail into the molding die, and performing a mold closing operation, such that the inner surface of the quarter window glass and the guide rail form a spacing area, and the spacing area is sealed by the molding die to form an injection cavity;
injecting a material of the encapsulation in a fluid state into the injection cavity from the first injection port and second injection ports corresponding to the two second gates respectively; and
performing a mold opening operation after the material of the encapsulation is solidified and shaped.

In one embodiment, performing the mold closing operation includes the steps of:
providing a first molding surface and a second molding surface on the molding die, and providing a first wall surface and a second wall surface on opposite sides of the guide rail along a length direction thereof, respectively; and
pressing, by the first molding surface, tightly against the first wall surface and sealing one side of the spacing area along the length direction, and pressing, by the second molding surface, tightly against the second wall surface and sealing another side of the spacing area along the length direction.

A vehicle, the vehicle includes the flush quarter window assembly and a vehicle body, and the flush quarter window assembly is provided on the vehicle body.

The details of one or more embodiments of the application are set forth in the accompanying drawings and the description below. Other features, objects, and advantages of the application will be apparent from the description and drawings, and from the claims.

### BRIEF DESCRIPTION OF THE DRAWINGS

FIG. 1 is a structural view of a flush quarter window assembly according to an embodiment of the present application.
FIG. 2 is a structural view of the flush quarter window assembly according to an embodiment of the present application.
FIG. 3 is a cross-sectional view at a line A-A of FIG. 2.
FIG. 4 is a structural view of a guide rail in the flush quarter window assembly according to an embodiment of the present application.
FIG. 5 is a structural view of a surface of a filling portion coplanar with a surface of a first rail plate during injection molding process according to an embodiment of the present application.
FIG. 6 is a structural view of a height difference provided between the surface of the filling portion and the surface of the first rail plate during the injection molding process according to an embodiment of the present application.
FIG. 7 is a structural view of a sub-mold of a molding die located in a sliding groove during the injection molding process according to an embodiment of the present application.
FIG. 8 is a structural view of the molding die tightly abutting against a first wall surface and a second wall surface respectively during the injection molding process according to an embodiment of the present application.

10. Quarter window glass; 20. Encapsulation; 21. Main section; 211. Filling portion; 2111. Surface of the filling portion; 212. First side surface; 213. Second side surface; 22. Transverse section; 30. Guide rail; 301. First injection port; 31. First rail plate; 311. Side surface; 32. Second rail plate; 33. Third rail plate; 34. Sliding groove; 341. Limiting portion; 35. Abutting portion; 351. First abutting portion; 352. Second abutting portion; 36. First wall surface; 37. Second wall surface; 38. Sealing strip; 381. Anti-detachment portion; 39. Reinforcing portion; 40. Spacing area; 50. Lifting glass; 60. Molding die; 61. Avoidance portion; 62. First molding surface; 63. Second molding surface; 64. Injection channel; 70. Moving bracket.

### DETAILED DESCRIPTION OF THE EMBODIMENTS

In order to make the above objectives, features and advantages of the present application clear and easier to understand, the specific embodiments of the present application are described in detail below in combination with the accompanying drawings. Many specific details are set forth in the following description to facilitate a full understanding of the present application. However, the present application can be implemented in many ways different from those described herein, and those skilled in the art can make similar improvements without departing from the connotation of the present application. Therefore, the present application is not limited by the specific embodiments disclosed below.

As described in the background, the obtained flush quarter window assembly has poor stability, and is prone to loosening or even detachment after a period of use or under external force. The inventors have found that the reason for this problem is that in the injection molding process of the related art, a material of an encapsulation is generally injected into a cavity enclosed by a quarter window glass and a mold from gates provided on upper and lower transverse sections of the encapsulation. However, a design space between the guide rail, the quarter window glass, and a groove is relatively limited, so that a distance between the guide rail and the inner surface of the quarter window glass is relatively small, resulting in a relatively thin encapsulation. Especially when a size of the quarter window glass along a vertical direction is large and a length of the guide rail is long, problems such as insufficient injection material and stagnation are prone to occur between the guide rail and the inner surface of the quarter window glass, and thus the finally obtained flush quarter window assembly has poor stability and is prone to loosening or even detachment after a period of use or under external force.

Based on the above reasons, the present application provides a vehicle, a flush quarter window assembly and a processing method therefor, which can improve the connection stability between the guide rail and the quarter window glass.

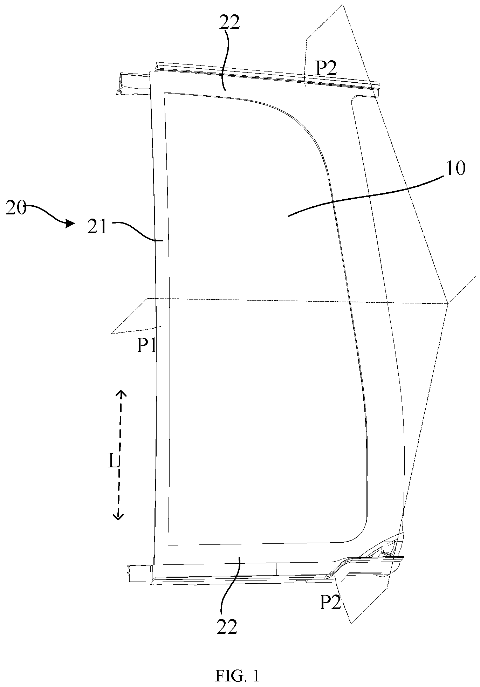

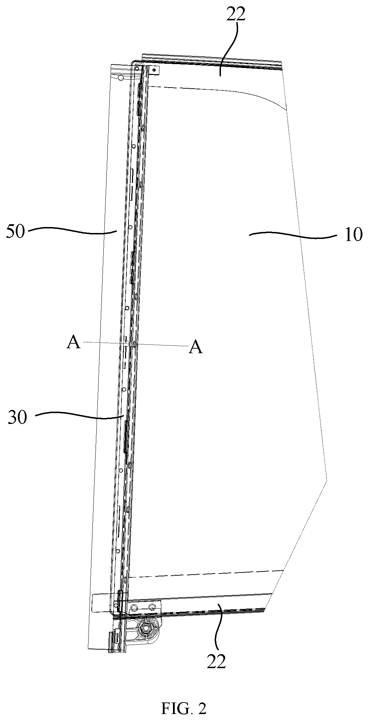

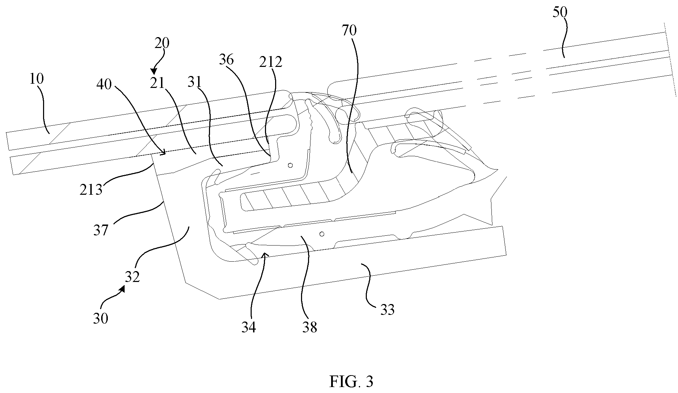

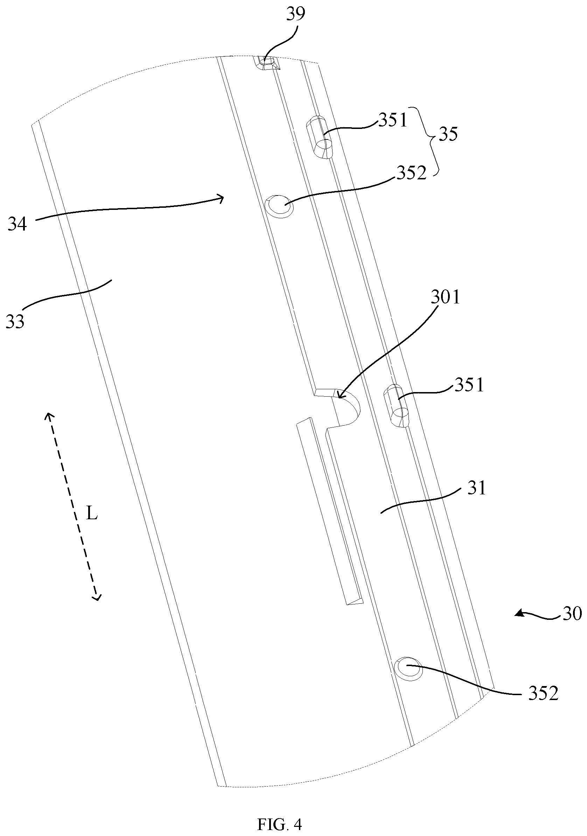

Referring to FIGS. 1 to 4, FIG. 1 shows a structural view of an encapsulation 20 combined with a quarter window glass 10, FIG. 2 shows a structural view of a lifting glass 50, a guide rail 30 and the quarter window glass 10 combined together, and the lifting glass 50 shown in FIG. 2 is a partial structure, FIG. 3 shows a cross-sectional view at a line A-A of FIG. 2, and FIG. 4 shows a structural view of the guide rail 30. A flush quarter window assembly provided by an embodiment of the present application includes the quarter window glass 10, the encapsulation 20, and the guide rail 30. The guide rail 30 is opposite to and spaced apart from an inner surface of the quarter window glass 10, and the guide rail 30 is provided with a first injection port 301. The encapsulation 20 includes a main section 21 integrally injection molded in a spacing area 40 between the inner surface of the quarter window glass 10 and the guide rail 30, and two transverse sections 22 integrally injection molded on the quarter window glass 10 and respectively connected to opposite ends of the main section 21. The main section 21 is provided with a first gate corresponding to the position of the first injection port 301, and each of the two transverse sections 22 is provided with a second gate.

It should be noted that the inner surface of the quarter window glass 10 refers to a side surface of the quarter window glass 10 facing the interior of a vehicle, and an outer surface of the quarter window glass 10 refers to a side surface of the quarter window glass 10 facing the exterior of the vehicle.

In the aforementioned flush quarter window assembly, since the encapsulation 20 includes the main section 21 integrally injection molded in the spacing area 40 between the inner surface of the quarter window glass 10 and the guide rail 30, and two transverse sections 22 integrally injection molded on the quarter window glass 10 and respectively connected to the opposite ends of the main section 21, the quarter window glass 10, the encapsulation 20, and the guide rail 30 can form an integral structure. Furthermore, the encapsulation 20 does not protrude from the outer surface of the quarter window glass 10, so that the outer surface of the quarter window glass 10 and the outer surface of the lifting glass 50 can be coplanar with each other, and the appearance performance of the product is enhanced. In addition, since the guide rail 30 is provided with the first injection port 301, and a portion of each of the two transverse sections 22 corresponds to a molding die 60 is provided with a second injection port, during the manufacturing process, a material of the encapsulation 20 can be injected into each position of the spacing area 40 between the guide rail 30 and the inner surface of the quarter window glass 10 through the first injection port 301 and the two second injection ports respectively, so that each position of the spacing area 40 can be filled with the material of the encapsulation 20, that is, it can avoid defects such as insufficient injection molding and stagnation caused by the difficulty of the material of the encapsulation 20 flowing from the area between the transverse section 22 and the inner surface of the quarter window glass 10 and filling the area between the main section 21 and the inner surface of the quarter window glass 10 when a distance between the guide rail 30 and the inner surface of the quarter window glass 10 is too small, and thus the connection stability between the guide rail 30 and the inner surface of the quarter window glass 10 can be improved.

In some embodiments, the first injection port 301 includes, but is not limited to, an open-ended opening provided on the guide rail 30, or a closed opening, or other forms, which are specifically adjusted and configured flexibly according to actual needs. The open-ended opening means that a point on a port wall of the injection port is selected as a starting point, it is impossible to return to the starting point by moving along a single direction of the port wall from the starting point. Conversely, a closed hole means that a point on the port wall of the injection port is selected as the starting point, it is possible to return to the starting point by moving along a single direction of the port wall from the starting point. In addition, the second injection port is provided on the molding die 60, and specifically, for example, it is a discharge port of an injection tube of the molding die 60, or it is a discharge port of an injection channel 64 of the molding die 60, or it is provided in other forms. The shape of the second injection port is similar to that of the first injection port 301, and will not be described in detail here.

Optionally, the first injection port 301 and the second injection port are independently provided in various regular shapes, including but not limited to U-shaped ports, semi-circular ports, circular ports, semi-elliptical ports, elliptical ports, polygonal ports, and other irregular shapes, which can be specifically adjusted and configured flexibly according to actual needs. In this embodiment, the first injection port 301 is specifically configured as a U-shaped port, as shown in FIG. 4.

In some embodiments, after the material of the encapsulation 20 is injected into the spacing area 40 through the first injection port 301, the material of the encapsulation 20 is further filled in the first injection port 301 and integrally injection molded in the first injection port 301. In the molded product, it can be observed that a filling portion 211 is obtained at the first injection port 301, and a gate residue, i.e., a first gate, is formed on a surface 2111 of the filling portion 211 at the first injection port 301 at a position where it is in contact with the injection channel 64. Similarly, it can be observed that a gate residue, i.e., a second gate, is formed at a position of the transverse section 22 corresponding to the second injection port.

In some embodiments, the encapsulation 20 includes, but is not limited to, at least one of plastic materials such as PP (Polypropylene), ABS (Acrylonitrile Butadiene Styrene plastic), PC (Poly carbonate), PA (Poly amide), SAN (acrylonitrile-styrene copolymer), PBT (Poly butylene terephthalate), POM (Polyformaldehyde), PVC (Poly vinyl chloride), and PU (Poly urethane).

Referring to FIGS. 1 to 4, in one embodiment, the first injection port 301 is provided at a middle portion of the guide rail 30 along a length direction L thereof. The first gate is correspondingly located at the middle portion of the guide rail 30 along the length direction L thereof. Specifically, the first gate is located at the exact middle position of the guide rail 30 along the length direction L thereof, as shown by point P1 in FIG. 1. In this way, after injecting the material of the encapsulation 20 in a fluid state from the first gate, the material of the encapsulation 20 flows to opposite ends of the guide rail 30 respectively, which can improve the dispersion uniformity of the material of the encapsulation 20, so as to fill the spacing area 40 between the guide rail 30 and the inner surface of the quarter window glass 10. Furthermore, the second gate can be located at any position on the transverse section 22. Specifically, the positions of the two second gates on the two transverse sections 22 are shown as point P2 in FIG. 1. After injecting the material of the encapsulation 20 in a fluid state from the second injection port corresponding to the second gate, part of the material of the encapsulation 20 will be, but is not limited to, attached to the inner surface and/or outer surface of the quarter window glass 10, and another part can flow and fill the spacing area 40 between the guide rail 30 and the inner surface of the quarter window glass 10.

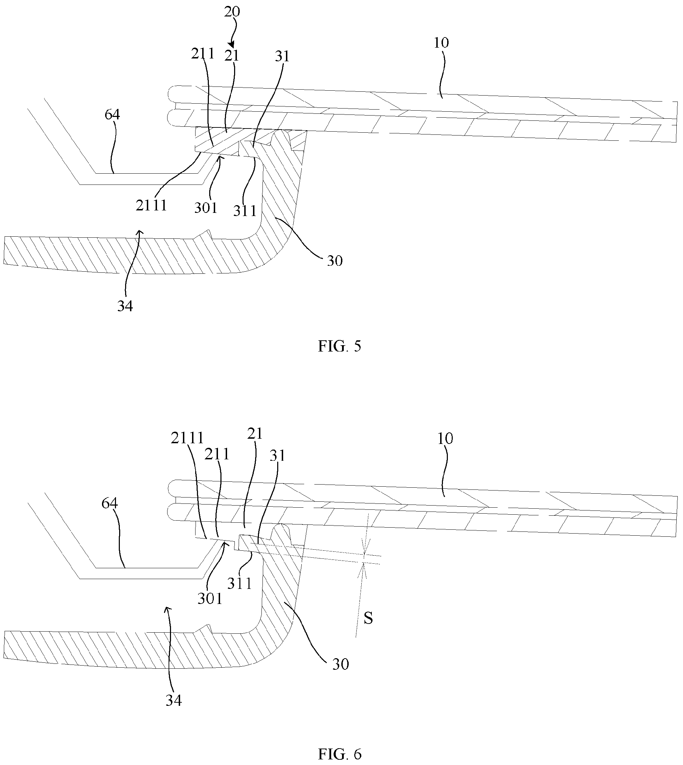

Referring to FIGS. 4 and 5, FIG. 5 shows a schematic structural view of injecting the material of the encapsulation 20 into the spacing area 40 through the first injection port 301 via an injection channel 64 during the injection molding process. The injection channel 64 is provided in the molding die 60, and the other structures of the molding die 60 are hidden and not shown. In some embodiments, the guide rail 30 includes a first rail plate 31 interconnected with the main section 21. The first injection port 301 is formed on the first rail plate 31, and the main section 21 is provided with the filling portion 211 filled in the first injection port 301. The first gate is formed on the surface 2111 of the filling portion 211. The surface 2111 of the filling portion 211 is coplanar with a side surface 311 of the first rail plate 31 away from the main section 21.

Referring to FIGS. 4 and 6, FIG. 6 shows a schematic structural view of injecting the material of the encapsulation 20 into the spacing area 40 through the first injection port 301 via the injection channel 64 during the injection molding process. In other embodiments, the surface 2111 of the filling portion 211 and the side surface 311 of the first rail plate 31 away from the main section 21 may not be coplanar. Specifically, a distance between the surface 2111 of the filling portion 211 and the quarter window glass 10 is less than a distance between the side surface 311 of the first rail plate 31 away from the main section 21 and the quarter window glass 10. In other words, there is a height difference S between the surface 2111 of the filling portion 211 and the side surface 311 of the first rail plate 31 away from the main section 21. Optionally, the height difference S between the surface 2111 of the filling portion 211 and the side surface 311 of the first rail plate 31 away from the main section 21 includes, but is not limited to, 1mm to 10mm, specifically such as 1mm, 3mm, 5mm or 10mm, etc., so that a protrusion height of the surface 2111 of the filling portion 211 at the first injection port 301 is reduced, which is configured to absorb the material of the encapsulation 20 remaining at the first gate on the surface 2111 of the filling portion 211, thereby reducing or even avoiding the noise caused by driving a moving bracket 70 to move in the sliding groove 34 during the movement of the lifting glass 50.

Referring to FIGS. 3 and 4, in some embodiments, the guide rail 30 further includes a second rail plate 32 connected to the first rail plate 31 and a third rail plate 33 connected to the second rail plate 32. The first rail plate 31, the second rail plate 32, and the third rail plate 33 enclose to form the sliding groove 34.

Referring to FIGS. 3 and 4, in one embodiment, the guide rail 30 is provided with at least one abutting portion 35. The abutting portion 35 tightly abuts against the inner surface of the quarter window glass 10. In this way, by tightly abutting the abutting portion 35 against the inner surface of the quarter window glass 10, the abutting portion 35 plays a precise positioning role, so that the distance between the guide rail 30 and the inner surface of the quarter window glass 10 is within a preset range, that is, the thickness of the main section 21 can be precisely controlled. In addition, the molding die 60 can also tightly abut against the inner surface of the quarter window glass 10 and the guide rail 30, thereby addressing the defects of glue overflow and flash.

In some embodiments, the abutting portion 35 includes, but is not limited to, various protruding structures such as a convex point, a tab, a bulge, or a convex column.

In some embodiments, for example, one abutting portion 35 is provided, and only one abutting portion 35 tightly abuts against the inner surface of the quarter window glass 10.

In other embodiments, the number of abutting portion 35 is not limited to one, for example, a plurality of abutting portions 35 are provided and spaced apart on the guide rail 30. The abutting portions 35 are spaced apart along the length direction L of the guide rail 30, so that the distance between each part of the guide rail 30 and the inner surface of the quarter window glass 10 is consistent, and the thickness of each position of the encapsulation 20 along the length direction L is highly consistent.

In still other embodiments, two abutting portions 35 may be provided, which are located on opposite sides of the first injection port 301, respectively.

Referring to FIG. 4, in some embodiments, the abutting portion 35 is specifically provided, for example, on the side surface 311 of the first rail plate 31 facing the quarter window glass 10.

It should be noted that the abutting portion 35 may be a part of the guide rail 30, that is, the abutting portion 35 and other parts of the guide rail 30 are integrally formed. Alternatively, the abutting portion 35 may be an independent component that can be separated from other parts of the guide rail 30, that is, the abutting portion 35 can be manufactured independently and then combined with other parts of the guide rail 30 to form a whole.

Referring to FIG. 4, in some embodiments, the abutting portion 35 may include at least one first abutting portion 35135. For example, the first abutting portion 35135 directly abuts against the inner surface of the quarter window glass 10, thereby achieving precise positioning of the guide rail 30. Alternatively, the abutting portion 35 may include at least one second abutting portion 35235, which indirectly abuts against the inner surface of the quarter window glass 10. Specifically, for example, the second abutting portion 35235 abuts against a sliding block of the molding die 60, so that the sliding block of the molding die 60 tightly abuts against the inner surface of the quarter window glass 10, thereby achieving precise positioning of the guide rail 30.

Referring to FIGS. 3, 7, and 8, FIG. 8 shows a structural view of the molding die 60 tightly abutting against a first wall surface 36 and a second wall surface 37 respectively during the injection molding process according to an embodiment of the present application. In some embodiments, one side of the guide rail 30 along the length direction L thereof is provided with a first wall surface 36, and one side of the main section 21 along the length direction L is provided with a first side surface 212. The first wall surface 36 is coplanar with the first side surface 212. In this way, during the injection molding process, a first molding surface 62 of the molding die 60 presses tightly against the first wall surface 36, while sealing one side of the spacing area 40. In this way, after the main section 21 is obtained by injection molding, the first side surface 212 coplanar with the first wall surface 36 can be obtained, which can prevent the material of the main section 21 from overflowing and the flash defect. In addition, since the main section 21 is not exposed outside the area of the first wall surface 36, a volume of the cavity is relatively reduced, the defects of insufficient injection molding and stagnation are prone to occur. By supplementing glue through the first injection port 301, the defects of insufficient injection molding and stagnation can be significantly improved. In addition, it is not necessary to provide an interior decorative panel to shield the encapsulation 20, which means that the interior decorative panel in the related art can be omitted, and the guide rail 30 can be directly exposed to the interior of the vehicle as a decorative surface. Since no interior decorative panel is needed, the structure is simplified and the cost is reduced.

Referring to FIGS. 3, 7, and 8, in some embodiments, the other side of the guide rail 30 along its length direction L is provided with the second wall surface 37, and the other side of the main section 21 along the length direction L is provided with a second side surface 213. The second wall surface 37 is coplanar with the second side surface 213. In this way, the function is similar to that of the first wall surface 36 being coplanar with the first side surface 212, and will not be described in detail here.

Referring to FIGS. 3, 7, and 8, in a specific embodiment, the first wall surface 36 is adjacent to a notch of the sliding groove 34, and the second wall surface 37 is away from the notch of the sliding groove 34. No injection port is provided on the second side surface 213 and the second wall surface 37, thereby avoiding the gate on the surface of the encapsulation 20 corresponding to the injection port being exposed and affecting the appearance. Furthermore, when the second side surface 213 is coplanar with the second wall surface 37, a visible area of the quarter window glass 10 can be increased.

In some embodiments, an interior decorative panel may also be provided, and the guide rail 30 is covered by the interior decorative panel, so that the guide rail 30 can be shielded and a decorative effect can be achieved.

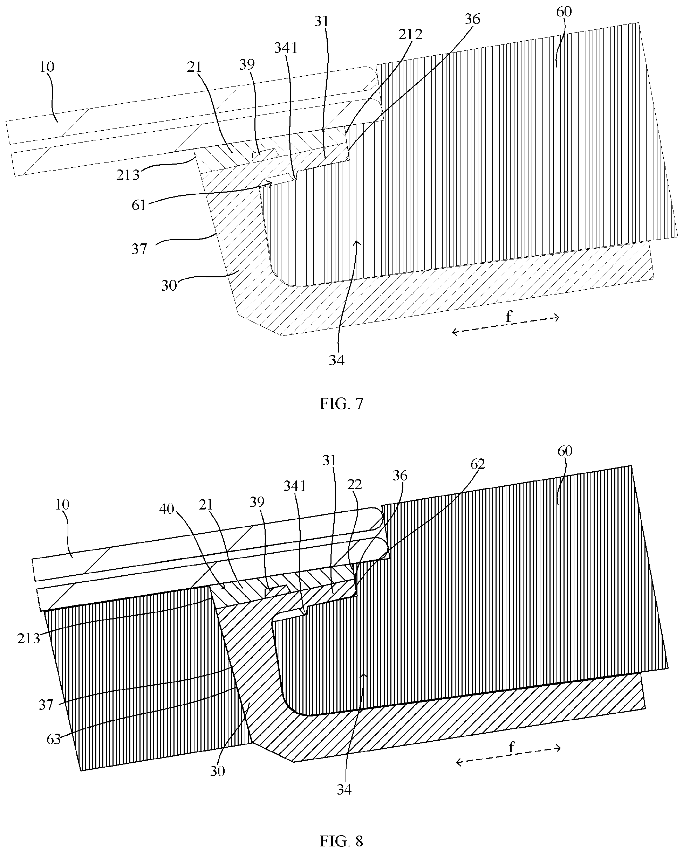

Referring to FIGS. 4 and 7, in one embodiment, the guide rail 30 is provided with the sliding groove 34, and an inner wall of the sliding groove 34 is provided with a limiting portion 341. A sealing strip 38 is further provided in the sliding groove 34, and the sealing strip 38 is provided with an anti-detachment portion 381 in limiting fit with the limiting portion 341. In this way, after the sealing strip 38 is mounted in the sliding groove 34, since the anti-detachment portion 381 is in limiting fit with the limiting portion 341, the sealing strip 38 can be stably provided in the sliding groove 34 without being easily detached from the sliding groove 34.

In order to facilitate the smooth insertion of the molding die 60 into the sliding groove 34 and the smooth removal from the sliding groove 34, the insertion and removal directions of the molding die 60 are shown as f in FIG. 7. The molding die 60 should be provided with an avoidance portion 61 to avoid the limiting portion 341. After being inserted into the sliding groove 34, the avoidance portion 61 will not interfere with the limiting portion 341, so that it can also be removed from the sliding groove 34 in a reverse direction, which facilitates the demolding action.

Furthermore, since an area between the limiting portion 341 and a bottom wall of the sliding groove 34 is not directly in contact with the molding die 60 and is spaced from the avoidance portion 61, the area between the limiting portion 341 and the bottom wall of the sliding groove 34 is not supported by the molding die 60 and will be deformed or even damaged during the injection molding process.

Referring to FIGS. 4 and 7, in one embodiment, the side surface 311 of the guide rail 30 facing the quarter window glass 10 is provided with a reinforcing portion 39 corresponding to the limiting portion 341. In this way, by adding the reinforcing portion 39 on the side surface 311 of the guide rail 30 facing the quarter window glass 10, the structural strength of the area between the limiting portion 341 and the bottom wall of the sliding groove 34 can be enhanced. At the same time, a distance between the guide rail 30 and the inner surface of the quarter window glass 10 can be reduced to reduce the pressure on the area between the limiting portion 341 and the bottom wall of the sliding groove 34 during the injection molding process, thereby improving the deformation and damage defects caused by stress on the area between the limiting portion 341 and the bottom wall of the sliding groove 34 during the injection molding process.

Referring to FIG. 7, in one embodiment, an area between the limiting portion 341 and the bottom wall of the sliding groove 34 corresponds to a position of the reinforcing portion 39. The bottom wall of the sliding groove 34 is a wall surface of the sliding groove 34 opposite to the notch. In this way, a size of an outer contour of the reinforcing portion 39 does not need to be too large, as long as the reinforcing portion 39 can cover the area between the limiting portion 341 and the bottom wall of the sliding groove 34, the structural strength of the area between the limiting portion 341 and the bottom wall of the sliding groove 34 can be effectively increased.

The area between the limiting portion 341 and the bottom wall of the sliding groove 34 is an area on the side wall of the sliding groove 34 opposite to the avoidance portion 61, specifically an area on the inner wall of the first rail plate 31 opposite to the position of the avoidance portion 61.

It should be noted that the position correspondence means that, along a direction perpendicular to the side wall of the sliding groove 34, a projection of the reinforcing portion 39 on a surface of the side wall of the sliding groove 34 at least partially or completely overlaps with the area between the limiting portion 341 and the bottom wall of the sliding groove 34.

Referring to FIG. 3, in one embodiment, the flush quarter window assembly further includes the lifting glass 50 and the moving bracket 70 connected to the lifting glass 50. The guide rail 30 is provided with the sliding groove 34, the sealing strip 38 is provided in the sliding groove 34, and the moving bracket 70 is slidably provided in the sealing strip 38.

Referring to FIG. 3, in one embodiment, the outer surface of the lifting glass 50 is coplanar with the outer surface of the quarter window glass 10.

It should be noted that the outer surface of the lifting glass 50 refers to a side surface of the lifting glass 50 facing the exterior of the vehicle, while the inner surface of the lifting glass 50 refers to a side surface of the lifting glass 50 facing the interior of the vehicle.

Referring to FIGS. 3 and 7, in one embodiment, a processing method for the flush quarter window assembly according to any one of the aforementioned embodiments includes the following steps.

A molding die 60 is provided, the quarter window glass 10 and the guide rail 30 are placed into the molding die 60, and the mold closing operation is performed, so that the inner surface of the quarter window glass 10 and the guide rail 30 form the spacing area 40, and the spacing area 40 is sealed by the molding die 60 to form an injection cavity.

The material of the encapsulation 20 in a fluid state is injected into the injection cavity from the first injection port 301 and the second injection ports corresponding to the two second gates respectively.

After the material of the encapsulation 20 is solidified and shaped, a mold opening operation is performed.

In the aforementioned processing method for the flush quarter window assembly, during the manufacturing process, the encapsulation material 20 can be injected into each position of the spacing area 40 between the guide rail 30 and the inner surface of the quarter window glass 10 through the first injection port 301 and the two second injection ports respectively, so that each position of the spacing area 40 is filled with the material of the encapsulation 20, that is, it can avoid defects such as insufficient injection molding and stagnation caused by the difficulty of the material of the encapsulation 20 flowing from the area between the transverse section 22 and the inner surface of the quarter window glass 10 and filling the area between the guide rail 30 and the inner surface of the quarter window glass 10 when the distance between the guide rail 30 and the inner surface of the quarter window glass 10 is too small, and thus the connection stability between the guide rail 30 and the inner surface of the quarter window glass 10 can be improved.

Referring to FIGS. 3 and 7, in one embodiment, the mold closing operation includes the following steps.

The molding die 60 is provided with the first molding surface 62 and a second molding surface 63, and opposite sides of the guide rail 30 along the length direction L thereof are respectively provided with the first wall surface 36 and the second wall surface 37.

The first molding surface 62 presses tightly against the first wall surface 36 and seals one side of the spacing area 40 along the length direction L, and the second molding surface 63 presses tightly against the second wall surface 37 and seals the other side of the spacing area 40 along the length direction L.

Referring to FIGS. 1 to 4, in one embodiment, a vehicle is provided including the flush quarter window assembly according to any one of the aforementioned embodiments and further includes a vehicle body, and the flush quarter window assembly is provided on the vehicle body.

In the aforementioned vehicle, since the encapsulation 20 includes the main section 21 integrally injection molded in the spacing area 40 between the inner surface of the quarter window glass 10 and the guide rail 30, and two transverse sections 22 integrally injection molded on the quarter window glass 10 and respectively connected to the opposite ends of the main section 21, the quarter window glass 10, the encapsulation 20 and the guide rail 30 can form an integral structure. Furthermore, the encapsulation 20 does not protrude from the outer surface of the quarter window glass 10, so that the outer surface of the quarter window glass 10 and the outer surface of the lifting glass 50 can be coplanar with each other, and the appearance performance of the product is enhanced. In addition, since the guide rail 30 is provided with the first injection port 301, and a portion of each of the two transverse sections 22 corresponds to a molding die 60 is provided with the second injection port, during the manufacturing process, a material of the encapsulation 20 can be injected into each position of the spacing area 40 between the guide rail 30 and the inner surface of the quarter window glass 10 through the first injection port 301 and the two second injection ports respectively, so that each position of the spacing area 40 can be filled with the material of the encapsulation 20, that is, it can avoid defects such as insufficient injection molding and stagnation caused by the difficulty of the material of the encapsulation 20 flowing from the area between the transverse section 22 and the inner surface of the quarter window glass 10 and filling the area between the main section 21 and the inner surface of the quarter window glass 10 when a distance between the guide rail 30 and the inner surface of the quarter window glass 10 is too small, and thus the connection stability between the guide rail 30 and the inner surface of the quarter window glass 10 can be improved.

It should be noted that the two surfaces are coplanar means that the positions where the two surfaces butt against each other are on the same plane.

In the present application, unless otherwise expressly specified and limited, the terms "mount", "connect", "couple", "fix" and the like should be interpreted broadly. For example, the terms can mean fixed connection, detachable connection, or being integrated. The terms can mean mechanical connection or electrical connection. The terms can mean directly connection or indirectly connection through an intermediate medium. The terms can mean connection within two elements or interaction relationship between two elements, unless otherwise expressly limited. For those skilled in the art, the specific meaning of the above terms in the present application should be understood according to the specific situation.

In the present application, unless otherwise expressly specified and limited, a first feature "above" or "below" a second feature may be in direct contact with the second feature, or the first and second features may be in indirect contact through an intermediate medium. Moreover, the first feature "above" the second feature may be right above or obliquely above the second feature, or the first feature may be merely located at a height higher than the second feature. The first feature "below" the second feature may be right below or obliquely below the second feature, or the first feature may be merely located at a height lower than that of the second feature.

The technical features of the above embodiments can be combined in any way. For the sake of brevity, not all possible combinations of the technical features in the above embodiments are described. However, as long as there is no contradiction in the combination of these technical features, they should be considered to be within the scope of this description.

The foregoing descriptions are merely specific embodiments of the present application, but are not intended to limit the protection scope of the present application. It should be noted out that any variation or replacement readily figured out by a person skilled in the art within the technical scope disclosed in the present application shall all fall within the protection scope of the present application. Therefore, the protection scope of the present application shall be subject to the protection scope of the appended claims.

## Claims

1. A flush quarter window assembly, comprising:
a quarter window glass;
a guide rail opposite to and spaced apart from an inner surface of the quarter window glass, the guide rail being provided with a first injection port; and
an encapsulation comprising a main section integrally injection molded in a spacing area between the inner surface of the quarter window glass and the guide rail , and two transverse sections integrally injection molded on the quarter window glass and respectively connected to opposite ends of the main section; the main section being provided with a first gate corresponding to the position of the first injection port, and each of the two transverse sections being provided with a second gate.

2. The flush quarter window assembly according to claim 1, wherein the first injection port is provided at a middle portion of the main section along a length direction thereof.

3. The flush quarter window assembly according to claim 1 or 2, wherein the guide rail comprises a first rail plate interconnected with the main section, the first injection port is formed on the first rail plate, the main section is provided with a filling portion filled in the first injection port, and the first gate is formed on a surface of the filling portion;
wherein the surface of the filling portion is coplanar with a side surface of the first rail plate away from the main section, or a distance between the surface of the filling portion and the quarter window glass is less than a distance between the side surface of the first rail plate away from the main section and the quarter window glass.

4. The flush quarter window assembly according to claim 3, wherein when the distance between the surface of the filling portion and the quarter window glass is less than the distance between the side surface of the first rail plate away from the encapsulationand the quarter window glass, a height difference S between the surface of the filling portion and the side surface of the first rail plate away from the encapsulation ranges from 1mm to10mm.

5. The flush quarter window assembly according to any one of claims 1 to 4, wherein the guide rail is provided with at least one abutting portion tightly abutting against the inner surface of the quarter window glass.

6. The flush quarter window assembly according to claim 5, wherein the abutting portion is provided as a convex point, a tab, a bulge, or a convex column; and/or, a plurality of abutting portions are provided and spaced apart on the guide rail.

7. The flush quarter window assembly according to any one of claims 1 to 6, wherein one side of the guide rail along a length direction thereof is provided with a first wall surface, one side of the main section along a length direction thereof is provided with a first side surface, and the first wall surface is coplanar with the first side surface;
and/or, another side of the guide rail along a length direction thereof is provided with a second wall surfac, another side of the main section along a length direction thereof is provided with a second side surface, and the second wall surface is coplanar with the second side surface.

8. The flush quarter window assembly according to any one of claims 1 to 7, wherein the guide rail is provided with a sliding groove, an inner wall of the sliding groove is provided with a limiting portion, a sealing strip is further provided in the sliding groove, and the sealing strip is provided with an anti-detachment portion in limiting fit with the limiting portion.

9. The flush quarter window assembly according to claim 8, wherein a side surface of the guide rail facing the quarter window glass is provided with a reinforcing portion corresponding to the limiting portion.

10. The flush quarter window assembly according to claim 9, wherein an area between the limiting portion and a bottom wall of the sliding groove corresponds to a position of the reinforcing portion.

11. The flush quarter window assembly according to any one of claims 1 to 10, further comprising a lifting glass and a moving bracket connected to the lifting glass, wherein the guide rail is provided with a sliding groove, a sealing strip is provided in the sliding groove, and the moving bracket is slidably provided in the sealing strip.

12. The flush quarter window assembly according to claim 11, wherein an outer surface of the lifting glass is coplanar with an outer surface of the quarter window glass.

13. A processing method for the flush quarter window assembly according to any one of claims 1 to 12, the processing method comprising the following steps:
providing a molding die, placing the quarter window glass and the guide rail into the molding die, and performing a mold closing operation, such that the inner surface of the quarter window glass and the guide rail form a spacing area, and the spacing area is sealed by the molding die to form an injection cavity;
injecting a material of the encapsulationin a fluid state into the injection cavity from the first injection port and second injection ports corresponding to the two second gates respectively; and
performing a mold opening operation after the material of the encapsulationis solidified and shaped.

14. The processing method according to claim 13, wherein performing the mold closing operation comprises the steps of:
providing a first molding surface and a second molding surface on the molding die, and providing a first wall surface and a second wall surface on opposite sides of the guide rail along a length direction thereof, respectively; and
pressing, by the first molding surface, tightly against the first wall surface and sealing one side of the spacing area along the length direction, and pressing, by the second molding surface, tightly against the second wall surface and sealing another side of the spacing area along the length direction.

15. A vehicle, comprising the flush quarter window assembly according to any one of claims 1 to 12 and a vehicle body, and the flush quarter window assembly being provided on the vehicle body.
